# EUROPÄISCHE PATENTANMELDUNG

(11) **EP 0 985 519 A2**
(43) Veröffentlichungstag der Anmeldung: **15.03.2000**
(21) Anmeldenummer: 99890283.7
(22) Anmeldetag: 02.09.1999
(51) Int. Cl.: B29C 70/50, B29B 15/12

(54) **Verfahren zur Herstellung von mit Naturfasermatten verstärkten Thermoplastplatten sowie deren Verwendung zur Hestellung von Formteilen**

(30) Priorität: 07.09.1998 AT 151398
(71) Anmelder: ISOSPORT VERBUNDBAUTEILE GESELLSCHAFT MBH, 7000 Eisenstadt (AT)
(72) Erfinder: Erhardt, Günter, 7061 Trausdorf (AT); Krenn, Klaus, 7082 Donnerskirchen (AT)
(74) Vertreter: Dungler, Karin

(57) **Zusammenfassung**

Die Erfindung betrifft ein Verfahren zur Herstellung von mit Naturfasermatten verstärkten Thermoplastplatten sowie deren vorteilhafte Verwendung, bei welchem Naturfasermatten mit einer Thermoplastschmelze imprägniert und anschließend der Naturfasermattenverbund verpreßt wird. Dabei wird erfindungsgemäß mindestens eine der Naturfasermatten (10, 11) durch einen Düsenspalt (3', 4') einer Imprägnierdüse (3, 4) geführt, welche von Extrudern (1, 2) mit der Thermoplastschmelze (26, 28) regelbar gespeist werden, sodaß jeweils zwei Schmelzeströme (26', 26") und (28', 28") gebildet werden, welche am Düsenspaltausgang (27, 27') auf die Ober- und Unterseite der Naturfasermatten (10, 11) aufgetragen werden, wobei die Vorimprägnierung der Naturfasermatte stattfindet. Anschließend werden diese mit Thermoplast vorimprägnierten Naturfasermatten (30, 30') in einen Einlaufwalzenspalt (18) einer Doppelbandpresse (5) geführt, dort vorkalibriert und anschließend unter Druck mittels Kühlplatten (22, 22') zu mit Naturfasermatten verstärkten Thermoplastplatten (25) verpreßt.

## Beschreibung

### Technisches Gebiet

Die Erfindung betrifft ein Verfahren zur Herstellung von mit Naturfasermatten verstärkten Thermoplastplatten sowie deren vorteilhafte Verwendung.

### Stand der Technik

Es ist bekannt, Matten aus einer Mischung aus Natur- und Thermoplastfasern wie Polypropylen bereitzustellen, aus welchen Innenverkleidungsteile für die Automobilindustrie hergestellt werden können.

Dabei werden die Fasergemische in Form von Matten in Kontaktöfen vorerwärmt, sodaß die Polypropylenfasern zumindestens teilweise schmelzen und so einen Verbund mit den Naturfasern eingehen. In einem weiteren Preßschritt werden die Naturfasern in der Matte gänzlich mit der Polypropylenschmelze durchtränkt, sodaß kompakte Platten bzw. Formteile entstehen.

Diese Naturfaser/Polypropylenfasermatten können vor dem oben genannten Preßschritt gelagert werden, weisen jedoch dabei den Nachteil auf, daß zwischen den Fasern Hohlräume vorliegen, welche Feuchtigkeit aufnehmen. Dies führt nicht nur zu einer unerwünschten Gewichtserhöhung, sondern auch zu einer Fäulnisbildung bedingt durch die Naturfasern. Es muß daher die Feuchtigkeit durch einen zusätzlichen Verfahrensschritt, nämlich durch eine aufwendige Trocknung, vor dem weiteren Preßschritt entfernt werden. Somit ist das weitere Verfahren zur Herstellung der endgefertigten Platte bzw. zum endgefertigten Bauteil relativ aufwendig und zusätzlich mit einem hohen Energieverbrauch verbunden.

Unabhängig davon sind diese Naturfaser/Polypropylenfasermatten relativ lose betreffend die Faseranordnung, sodaß ein hoher Volumenbedarf entsteht, der mit hohem Transportaufwand sowie Kosten verbunden ist.

Aufgabe der Erfindung ist es daher, lagerstabile sowie leicht transportierbare Naturfaser-Thermoplastplatten in einem einfach durchführbaren und energiesparenden Verfahren bereitzustellen.

### Darstellung der Erfindung

Erfindungsgemäß wird daher ein Verfahren zur Herstellung von mit Naturfasermatten verstärkten Thermoplastplatten vorgeschlagen, welches dadurch gekennzeichnet ist, daß mindestens eine der Naturfasermatten (10, 11) durch den Düsenspalt (3', 4') einer Imprägnierdüse (3, 4) geführt wird, welche von Extrudern (1, 2) mit einer Thermoplastschmelze (26, 28) regelbar gespeist werden, sodaß jeweils zwei Schmelzeströme (26', 26") und (28', 28") gebildet werden, welche am Düsenspaltausgang (27, 27') auf die Ober- und Unterseite der Naturfasermatten (10, 11) aufgetragen werden, wobei die Vorimprägnierung der Naturfasermatte stattfindet und daß anschließend diese mit Thermoplast vorimprägnierten Naturfasermatten (30, 30') in den Einlaufwalzenspalt (18) einer Doppelbandpresse (5) geführt und vorkalibriert werden und anschließend unter Druck mittels Kühlplatten (22, 22') zu den mit Naturfasermatten verstärkten Thermoplastplatten (25) verpreßt werden.

Ferner wird vorgeschlagen, daß gleichzeitig zwei Naturfasermatten (10, 11) durch die Düsenspalte (3', 4') der Imprägnierdüsen (3, 4) geführt werden, welche von den Extrudern (1, 2) mit den Thermoplastschmelzen (26, 28) regelbar gespeist werden, und daß jeweils zwei Schmelzeströme (26', 26") und (28', 28") gebildet werden, welche am Düsenspaltausgang (27, 27') auf die Ober- und Unterseite der Naturfasermatten (10, 11) aufgetragen werden, wobei deren Vorimprägnierung stattfindet, und daß anschließend diese mit Thermoplast vorimprägnierten Naturfasermatten (30, 30') in den Einlaufwalzenspalt (18) der Doppelbandpresse (5) geführt und vorkalibriert werden und anschließend unter Druck mittels der Kühlplatten (22, 22') zu den mit Naturfasermatten verstärkten Thermoplastplatten (25) verpreßt werden.

Vorteilhafterweise werden die Naturfasermatten (10, 11) im Düsenspalt (3', 4') vorgewärmt.

Als Naturfasern werden vorteilhafterweise Bast- oder Hartfasern sowie Mischungen daraus eingesetzt.

Als Bastfasern sind besonders bevorzugt Flachs- oder Hanffasern; als Hartfasern werden solche wie Sisal bevorzugt.

Das Flächengewicht der Naturfasermatten liegt vorzugsweise in einem Bereich von 400 - 1100 g/m².

Für die Imprägnierung wird vorteilhafterweise als Thermoplastschmelze (26, 28) eine niedrig-viskose Polypropylen-Schmelze, welche gegebenenfalls Additive wie Peroxide enthält, eingesetzt.

Ein weiterer Vorteil der Erfindung besteht darin, daß der Schmelzestrom (26', 26") und (28', 28") durch den im Verteilerblock (8, 9) angebrachten Schmelzeschieber (29, 29') regelbar ist.

Nach einem weiteren Vorteil des erfindungsgemäßen Verfahrens werden die vorimprägnierten Naturfasermatten (30, 30') im, in seinem Querschnitt verstellbaren, Einlaufwalzenspalt (18) vorkalibriert.

Die nach dem erfindungsgemäßen Verfahren hergestellten mit Naturfasermatten verstärkten Thermoplastplatten werden vorteilhafterweise für die Herstellung von Formteilen wie Kraftfahrzeugteilen verwendet.

### Kurze Beschreibung der Zeichnungen und ein Weg zur Ausführung der Erfindung

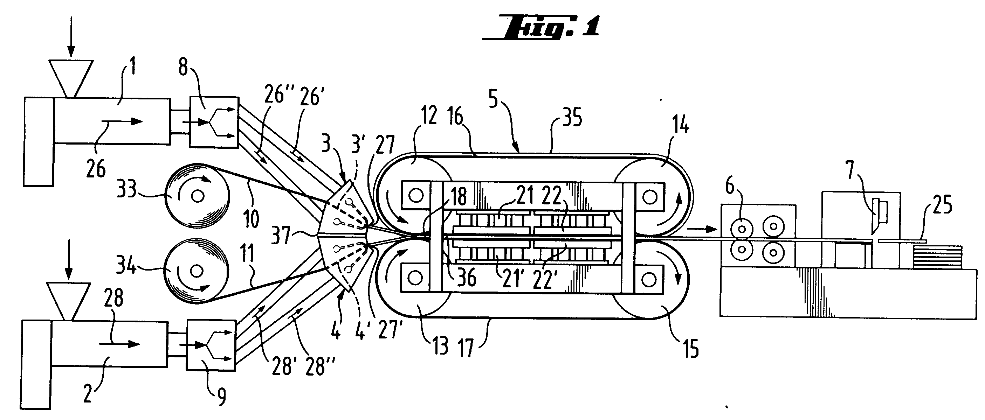

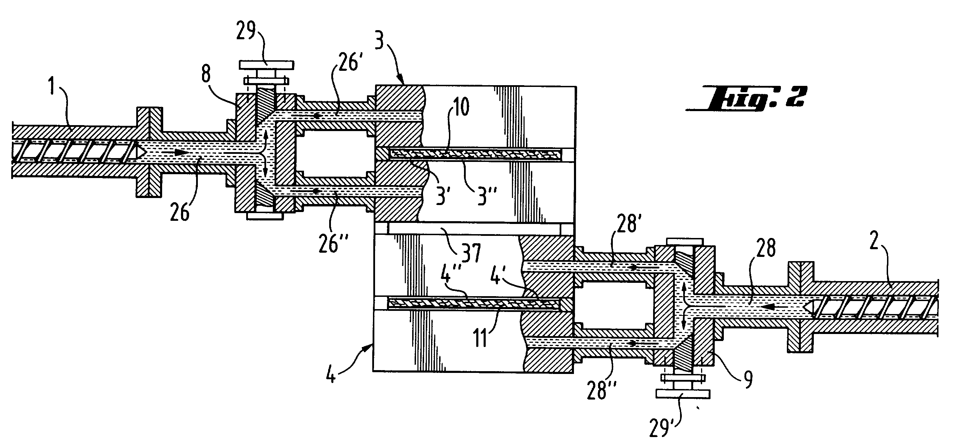

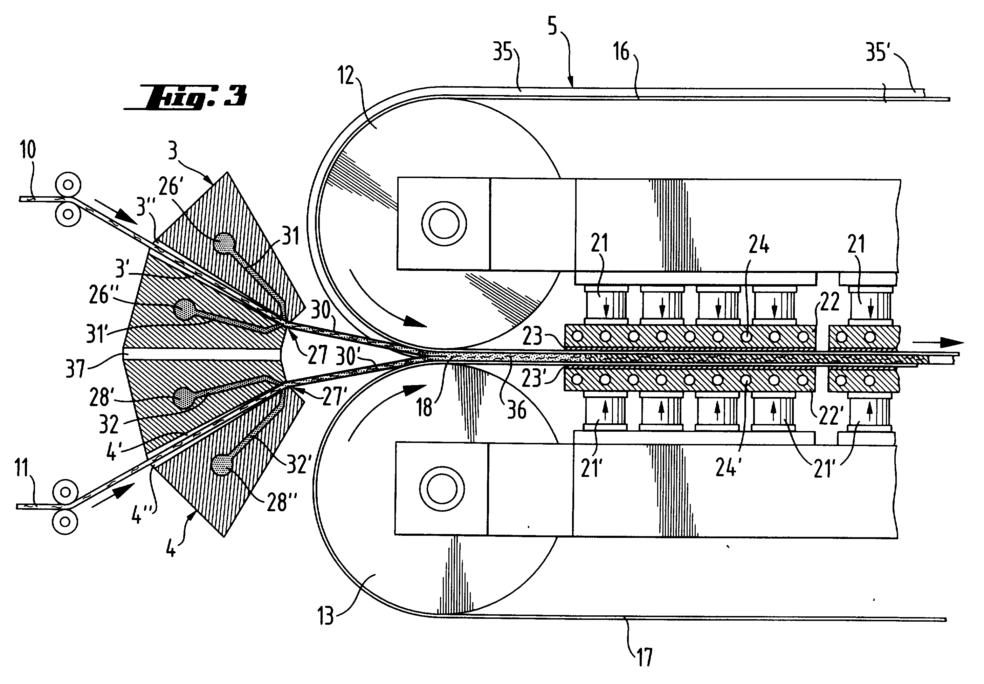

Das erfindungsgemäße Verfahren wird anhand der Fig. 1 - 3 erläutert.

Fig. 1 zeigt im wesentlichen die Extruder (1, 2,) die Imprägnierdüsen (3, 4) und die Doppelbandpresse (5).

Fig. 2 zeigt den Ausschnitt aus Fig. 1 betreffend die Extrudereinheiten (1) und (2), die Regeleinheiten (8) und (9) mit den Schmelzeschiebern (29, 29') sowie die Imprägnierdüsen (3, 4).

Fig. 3 zeigt den Ausschnitt gemäß Fig. 1 betreffend die Imprägnierdüsen (3, 4) und die Einlaufwalzenrollen (12, 13) der Doppelbandpresse.

Das erfindungsgemäße Verfahren wird wie folgt durchgeführt. In die Extruder (1, 2) wird ein Thermoplast, beispielsweise Polypropylen, welcher gegebenenfalls mit Additiven wie Peroxiden versetzt ist, zugeführt. In den auf mindestens die Schmelztemperatur des Thermoplasten aufgeheizten Extrudern (1), (2) wird der Thermoplast aufgeschmolzen und in Form der Thermoplastschmelzen (26) und (28) den Regeleinheiten (8) und (9) zugeführt. In der Regeleinheit (8, 9) kann der Schmelzestrom durch die Maßnahme eines Schmelzeschiebers (29, 29') reguliert werden; es werden die Schmelzeströme (26', 26") und (28', 28") gebildet, welche den Düsenschlitzen (31, 31') der Imprägnierdüse (3) sowie (32) und (32') der Imprägnierdüse (4) zugeführt werden. Die Imprägnierdüsen (3) und (4) werden mindestens auf die Schmelztemperatur des Thermoplasten erhitzt.

Von den Vorratsrollen (33, 34) werden die Naturfasermatten (10, 11) den Imprägnierdüsen (3, 4) zugeführt. Diese können beispielsweise genadelte Wirrfasermatten aus Flachs mit einem Flächengewicht von 400 bis 1100 g/m² sein.

Die Zuführung dieser Naturfasermatten (10, 11) erfolgt derart, daß sie die vorgewärmten Düsenspalte (3',4') passieren. Diese sind derart ausgeführt, daß sie zum Düsenspaltausgang (27, 27') hin konisch verlaufen. Der Düsenspaltquerschnitt ist daher beim Düsenspalteingang (3", 4") breiter als am Düsenspaltausgang (27, 27'). Am Düsenspaltausgang (27, 27') werden die Thermoplastschmelzeströme (26', 26") bzw. (28', 28") auf die Ober- und Unterseite der Naturfasermatten (10, 11) aufgetragen, sodaß bereits am Düsenspaltausgang (27, 27') die Vorimprägnierung der Naturfasermatten erfolgt. Durch diese Maßnahme erfolgt eine gleichmäßige Durchtränkung der Naturfasermatten, wobei das Ausmaß der Durchtränkung durch die Maßnahme der Reguliereinheiten (8, 9) eingestellt wird. Dadurch können die Eigenschaften, beispielsweise die Oberflächeneigenschaften, der mit Naturfasermatten verstärkten Thermoplastplatte (25) wesentlich beeinflußt werden.

Die beidseitig vorimprägnierten Naturfasermatten werden anschließend in den Einlaufwalzenspalt (18) der Doppelbandpresse (5) geführt. Diese besteht aus dem beheizten Einlaufwalzenpaar (12, 13) und dem Auslaufwalzenpaar (14, 15) wobei um das Walzenpaar (12, 14) bzw. (13, 15) jeweils ein Endlosstahlband (16, 17) gespannt ist. Der Einlaufwalzenspalt (18) ist in seinem Querschnitt verstellbar, sodaß eine Vorkalibrierung der vorimprägnierten Naturfasermatte (30, 30') erfolgt. Durch den Anpreßdruck der Walzen (12, 13) wird ein Naturfasermatten-Thermoplastvorverbund (36) gebildet. Dieser wird den Kühlplatten (22, 22') zugeführt, durch welche die Wärme aus dem Vorverbund (36) abgeführt wird. Die in den Kühlplatten angebrachten, vom Kühlmedium, beispielsweise Wasser durchflossenen Bohrungen (24, 24') sind so angeordnet, daß die Fließrichtungen in den gegenüberliegenden Platten (24) einerseits und (24') andererseits entgegengesetzt sind. Dadurch wird gewährleistet, daß die Eigenspannungen im Thermoplast, welche üblicherweise beim Extrudieren entstehen, abgebaut werden. Ferner dienen die Kühlplatten (22, 22') als Anpreßplatten und sind daher mit den Gleitfolien (23, 23') an der den Endlosstahlbändern (16, 17) zugekehrten Seite versehen; sie sind am Rahmen der Doppelbandpresse (5) mittels Druckzylindern (21, 21') befestigt und werden daher beidseitig am Vorverbund (36) angepreßt. Um innerhalb der Druckzone das Ausfließen der Thermoplastschmelze zu verhindern, werden zu beiden Seiten des Vorverbundes (36) die Führungsbänder (35, 35') welche in etwa die Dicke des Vorverbundes (36) aufweisen, seitlich in der Doppelbandpresse (5) endlos mitgeführt.

Durch die Maßnahme der Kühlplatten (22, 22') wird die Wärmeabfuhr aus dem Thermoplast bewirkt, sodaß das erfindungsgemäße Verfahren energiesparend geführt werden kann. Ferner kann der Anpreßdruck der Kühlplatten gering gehalten werden, beispielsweise bei 1 Bar, um das ausreichende Verpressen zu den endgefertigten naturfaserverstärkten Thermoplastplatten (25) zu bewirken. Das ist darauf zurückzuführen, daß die ausreichende Vorimprägnierung bereits am Düsenspaltausgang (27, 27') der Imprägnierdüsen (3, 4) erfolgt, sodaß der Anpreßdruck nicht zum Imprägnieren, sondern für die Ausbildung des Thermoplastvorverbundes (36) bzw. der endgefertigten Platte (25) dient. Die abgekühlten Thermoplastplatten (25) werden nach dem Passieren des Auslaufwalzenpaares (14, 15) einer Anordnung von Rundmessern (6) zugeführt, an welchen deren Seitenkanten geschnitten werden. Danach werden die Platten (25) in an sich bekannter Weise durch die Schlagscheren (7) abgelängt.

Die verfahrensgemäß hergestellten mit Naturfasermatten verstärkten Thermoplastplatten können eine Dicke zwischen 1 und 5 mm aufweisen; deren Naturfasergehalt liegt zwischen 20 und 50%.

Bei der Herstellung von mit Naturfasermatten verstärkten Thermoplastplatten mit hohem Naturfasergehalt, z.B. 50% und einer Dicke über 5 mm, kann eine dritte Naturfasermatte im Spalt (37) zwischen den beiden Imprägnierdüsen (3 und 4) geführt werden, um den Anteil an Naturfasern zu erhöhen.

Bei einer Herstellung von mit Naturfasern verstärkten Thermoplastplatten unter einer Dicke von 2,5 mm und einem Naturfasergehalt von unter 40% wird nur eine der Naturfasermatten (10) und (11) in das Verfahren eingesetzt.

### Gewerbliche Anwendbarkeit

Die durch das erfindungsgemäße Verfahren hergestellten mit Naturfasermatten verstärkten Thermoplastplatten können zur Herstellung von Formteilen wie Kraftfahrzeugteilen durch Formpreßverfahren verwendet werden. Dabei werden die mit Naturfasermatten verstärkten Thermoplastplatten auf ihre Schmelztemperatur aufgeheizt, in eine Preßform eingelegt und unter Druck zu einem Formteil verpreßt. Zur Erzeugung eines dekorativen Effektes können zusätzlich Kaschierlagen, beispielsweise mit einem Dekor versehene Teppiche, mitverpreßt werden.

## Patentansprüche

**1.** Verfahren zur Herstellung von mit Naturfasermatten verstärkten Thermoplastplatten durch Imprägnieren von Naturfasermatten mit einer Thermoplastschmelze und anschließendem Verpressen des Thermoplast-Naturfasermattenverbundes, dadurch gekennzeichnet, daß mindestens eine der Naturfasermatten (10, 11) durch den Düsenspalt (3', 4') einer Imprägnierdüse (3, 4) geführt wird, welche von Extrudern (1, 2) mit einer Thermoplastschmelze (26, 28) regelbar gespeist werden, sodaß jeweils zwei Schmelzeströme (26', 26") und (28', 28") gebildet werden, welche am Düsenspaltausgang (27, 27') auf die Ober- und Unterseite der Naturfasermatten (10, 11) aufgetragen werden, wobei deren Vorimprägnierung stattfindet und daß anschließend diese mit Thermoplast vorimprägnierten Naturfasermatten (30, 30') in den Einlaufwalzenspalt (18) einer Doppelbandpresse (5) geführt und vorkalibriert werden und anschließend unter Druck mittels Kühlplatten (22, 22') zu den mit Naturfasermatten verstärkten Thermoplastplatten (25) verpreßt werden.

**2.** Verfahren zur Herstellung von mit Naturfasermatten verstärkten Thermoplastplatten durch Imprägnieren von Naturfasermatten mit einer Thermoplastschmelze und anschließendem Verpressen des Thermoplast-Naturfasermattenverbundes, dadurch gekennzeichnet, daß gleichzeitig zwei Naturfasermatten (10, 11) durch den Düsenspalt (3', 4') einer Imprägnierdüse (3, 4) geführt werden, welche von Extrudern (1, 2) mit einer Thermoplastschmelze (26, 28) regelbar gespeist werden, und daß jeweils zwei Schmelzeströme (26', 26") und (28', 28") gebildet werden, welche am Düsenspaltausgang (27, 27') auf die Ober- und Unterseite der Naturfasermatten (10, 11) aufgetragen werden, wobei deren Vorimprägnierung stattfindet, und daß anschließend diese mit Thermoplast vorimprägnierten Naturfasermatten (30, 30') in den Einlaufwalzenspalt (18) einer Doppelbandpresse (5) geführt und vorkalibriert werden und anschließend unter Druck mittels der Kühlplatten (22, 22') zu den mit Naturfasermatten verstärkten Thermoplastplatten (25) verpreßt werden.

**3.** Verfahren nach Anspruch 1 oder 2, dadurch gekennzeichnet, daß die Naturfasermatten (10, 11) im Düsenspalt (3', 4') vorgewärmt werden.

**4.** Verfahren nach einem der Ansprüche 1 bis 3, dadurch gekennzeichnet, daß die Naturfasern Bast- oder Hartfasern sowie Mischungen daraus sind.

**5.** Verfahren nach Anspruch 4, dadurch gekennzeichnet, daß die Bastfasern aus Flachs oder Hanf sind.

**6.** Verfahren nach Anspruch 4, dadurch gekennzeichnet, daß die Hartfasern aus Sisal sind.

**7.** Verfahren nach einem der Ansprüche 1 bis 6, dadurch gekennzeichnet, daß als Thermoplastschmelze (26, 28) eine niedrig-viskose PolypropylenSchmelze, welche gegebenenfalls Additive wie Peroxide enthält, eingesetzt wird.

**8.** Verfahren nach einem der Ansprüche 1 bis 7, dadurch gekennzeichnet, daß der Schmelzestrom (26', 26") und (28', 28") durch den im Verteilerblock (8, 9) angebrachten Schmelzeschieber (29, 29') regelbar ist.

**9.** Verfahren nach einem der Ansprüche 1 bis 8, dadurch gekennzeichnet, daß die vorimprägnierten Naturfasermatten (30, 30') im in seinem Querschnitt verstellbaren Einlaufwalzenspalt (18) vorkalibriert werden.

**9.** Verfahren nach einem der Ansprüche 1 bis 8, dadurch gekennzeichnet, daß die vorimprägnierten Naturfasermatten (30, 30') im in seinem Querschnitt verstellbaren Einlaufwalzenspalt (18) vorkalibriert werden.

**10.** Verwendung der nach den Ansprüchen 1 bis 9 hergestellten mit Naturfasermatten verstärkten Thermoplastplatten zur Herstellung von Formteilen wie Kraftfahrzeugteilen.
